(19) Europäisches Patentamt
European Patent Office
Office européen des brevets

(11) **EP 1 600 894 B1**

(12) **EUROPEAN PATENT SPECIFICATION**

(45) Date of publication and mention
of the grant of the patent:
**29.12.2010 Bulletin 2010/52**

(51) Int Cl.:
*G06T 11/00* (2006.01)     *H04N 1/60* (2006.01)
*H04N 17/02* (2006.01)     *H04N 9/73* (2006.01)

(21) Application number: **05251888.3**

(22) Date of filing: **24.03.2005**

(54) **Apparatus and method for correcting the color of an image**

Apparat und Verfahren zum Korrigieren der Farbe eines Bildes

Appareil et procédé pour corriger la couleur d'une image

(84) Designated Contracting States:
**DE FR GB NL**

(30) Priority: **30.03.2004 KR 2004021818**

(43) Date of publication of application:
**30.11.2005 Bulletin 2005/48**

(73) Proprietor: **SAMSUNG ELECTRONICS CO., LTD.**
**Suwon-si,**
**Gyeonggi-do (KR)**

(72) Inventors:
• **Cho, Minki**
**Seongdong-gu**
**Seoul (KR)**
• **Choe, Wonhee**
**Gyeongju-si**
**Gyeongsangbuk-do (KR)**
• **Park, Dusik**
**301-1804 Cheongmyeong Maeul Dawoo Apt.**
**Suwon-si**
**Gyeonggi-dong (KR)**
• **Cho, Cheonyong**
**Yongin-si**
**Gyeonggi-do (KR)**
• **Kim, Changyeong**
**502-1305 Jinsan Maeul**
**Yongin-si**
**Gyeonggi-do (KR)**
• **Lee, Seongdeok**
**435-1504 Cheongmyeong Maeul**
**Yeongtong-gu**
**Suwon-si**
**Gyeonggi-do (KR)**
• **Ok, Hyunwook**
**c/o Samsung Advanced Inst. of Tech.**
**Yongin-si**
**Gyeonggi-do (KR)**
• **Kim, Daewon**
**110-301 Hyundai Baekjo Town Apt.**
**Daegu-si (KR)**
• **Lee, Hoyoung**
**Yeongtong-gu**
**Suwon-si**
**Gyeonggi-do (KR)**

(74) Representative: **Greene, Simon Kenneth**
**Elkington and Fife LLP**
**Prospect House**
**8 Pembroke Road**
**Sevenoaks**
**Kent TN13 1XR (GB)**

(56) References cited:
EP-A- 0 313 796     EP-A- 1 073 883
US-A- 5 483 259     US-A- 5 754 222
US-A- 6 078 309     US-B1- 6 686 953

**Description**

The present invention relates to an image display device such as a monitor for displaying an image, and more particularly, to an apparatus and a method for correcting color of an image to be displayed on an image display device.

In general, when the gamma characteristics of red (R), green (G), and blue (B) channels are the same in an image display device, gray components of an image to be displayed via the image display device do not include non-gray components. However, in most image display devices, the gamma characteristics of R, G, and B channels are not identical. Thus, gray components of an image to be displayed include non-gray components. Accordingly, in a conventional color-correcting method, the color reproduction characteristics of an image display device are found out using a colorimetric apparatus, and then non-gray components are removed from gray components of an image using the color reproduction characteristics.

Consequently, the conventional color-correcting method has a disadvantage in that a user of an image display device cannot correct the gray color reproduction characteristics of the image display device without a high-priced colorimetric apparatus.

US6,686,953 describes a method of visual calibration using various targets that corrects for grey balance as well as the tone curve (gamma).

Another method for detecting display characteristics by producing patterns to determine a number of display parameters, including color parameters, is described in US 5,754,222.

Another way of calibrating a display device by displaying color patches is described in 5,483,259.

Another calibration method is described in US 6,078,309, which describes adjusting a grey ramp to appear to be a neutral gray ramp.

According to an aspect of the present invention, there is provided an apparatus for correcting the color of an image to be displayed on an image display device according to claim 1.

According to another aspect of the present invention, there is provided a method of correcting the color of an image to be displayed on an image display device according to claim 9.

The present invention provides an image color-correcting apparatus for adjusting the characteristics of an image display device using only the characteristics of a user's visual system to correct color of an image using the adjusted characteristics of the image display device.

The present invention also provides an image color-correcting method of adjusting the characteristics of an image display device using only the characteristics of a user's visual system to correct color of an image using the adjusted characteristics of the image display device.

The above and other features and advantages of the present invention will become more apparent by describing in detail exemplary embodiments thereof with reference to the attached drawings in which:

FIG. 1 is a block diagram of an apparatus for correcting the color of an image, according to a preferred embodiment of the present invention;
FIG. 2 is a block diagram of a user interface of FIG. 1, according to a preferred embodiment of the present invention;
FIG. 3 is a view for showing the external appearance of the user interface of FIG. 1, according to a preferred embodiment of the present invention;
FIGS. 4A through 4E are views for showing examples of backgrounds;
FIG. 5 is a block diagram of a table generator of FIG. 1, according to a preferred embodiment of the present invention;
FIG. 6 is a block diagram of a color corrector of FIG. 1, according to a preferred embodiment of the present invention;
FIG. 7 is an exemplary graph for showing a first lookup table;
FIG. 8 is a flowchart for explaining a method of correcting the color of an image, according to a preferred embodiment of the present invention; and
FIG. 9 is a flowchart for explaining step 300 of FIG. 8, according to a preferred embodiment of the present invention.

Hereinafter, the structure and operation of an apparatus for correcting the color of an image, according to the present invention, will be described in detail with reference to the attached drawings.

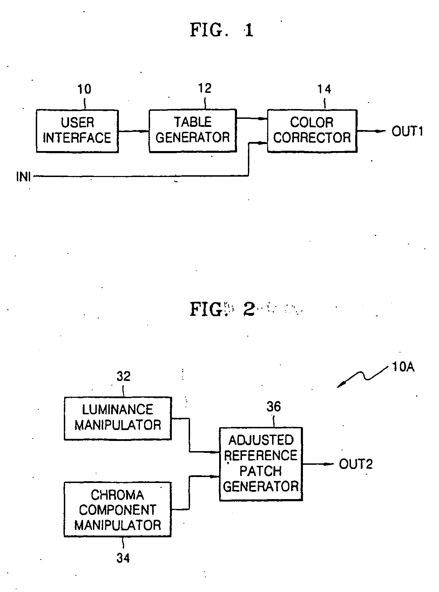

FIG. 1 is a block diagram of an apparatus for correcting the color of an image, according to a preferred embodiment of the present invention. Referring to FIG. 1, the apparatus includes a user interface 10, a table generator 12, and a color corrector 14.

The apparatus of FIG. 1 corrects the color of an image displayed on an image display device as follows. Here, the image display device refers to a monitor or the like.

According to an aspect of the present invention, the user interface 10 displays each of N reference patches on the image display device, removes non-gray components from the displayed reference patches depending on the characteristics of a user's visual system, and outputs the reference patches from which the non-gray components have been removed as adjusted reference patches to the table generator 12. Here, **N** is a predetermined positive number greater than equal to "1", where the greater the predetermined positive number, the better.

According to another aspect of the present invention, the user interface 10 displays a plurality of pairs one by one. Here, each of the plurality of pairs includes a reference patch and a background. Each background pairing with each reference patch is pre-determined. For example, luminances $L_B$ and $L_P$ of a background and a reference patch which are a pair may have the relationship as shown in Equation 1:

$$L_B = \frac{L_P}{B} \qquad \ldots(1)$$

wherein $L_B$ can be represented by a percentage and **B** denotes a maximum value of levels of an electric signal, which may be provided to each of pixels displayed on the image display device, for example, may be 255.

The user interface 10 removes non-gray components from the reference patches of the displayed pairs depending on the characteristics of the user's visual system and matches luminances of the displayed reference patches with luminances of the displayed backgrounds depending on the characteristics of the user's visual system. Here, the user interface 10 outputs the reference patches, from which the non-gray components have been removed and the luminances of which have matched with the luminances of the displayed backgrounds, as adjusted reference patches.

The table generator 12 generates at least one lookup table (LUT) which stores as addresses color component values an image may have and color component values of the adjusted reference patches input from the user interface 10 as data, and outputs the generated at feast one LUT to the color corrector 14. Here, the color component values may refer to R, G, and B component values. Also, the LUTs for storing the R, G, and B component values, respectively, may be generated separately. For example, the LUT for the R component stores as addresses R component values the image may have and R component values of the adjusted reference patches as data.

The color corrector 14 addresses at least one LUT using color component values of an image to be displayed which are input as address of LUT via an input node IN1, reads data corresponding to the color component values from the at least one LUT, and outputs the read data as the result of correcting color of the image to be displayed via an output node OUT1.

FIG. 2 is a block diagram of the user interface 10 of FIG. 1, according to a preferred embodiment of the present invention. Referring to FIG. 2, a user interface 10A includes a luminance manipulator 32, a chroma component manipulator 34, and an adjusted reference patch generator 36.

The luminance manipulator 32 is manipulated by a user, who desires to match the luminances of the displayed reference patches with the luminances of the displayed backgrounds which are a pair with the displayed reference patches, to match the luminances of the displayed reference patches with the luminances of the displayed backgrounds and outputs the manipulation results to the adjusted reference patch generator 36. In other words, the user manipulates the luminance manipulator 32 to match the luminances of the displayed reference patches with the luminances of the displayed backgrounds based on the characteristics of the user's visual system.

The chroma component manipulator 34 is manipulated by a user, who desires to remove the non-gray components from the displayed reference patches, to remove the non-gray components from the displayed reference patches and outputs the removal results to the adjusted reference patch generator 36. In other words, the user manipulates the chroma component manipulator 34 to remove the non-gray components from the displayed reference patches based on the characteristics of the user's visual system.

The adjusted reference patch generator 36 generates the adjusted reference patches using the reference patches, the luminances of which have been manipulated by the luminance manipulator 32 and from which the non-gray components have been removed by the chroma component manipulator 34, and outputs the adjusted reference patches to the color corrector 14 via an output node OUT2.

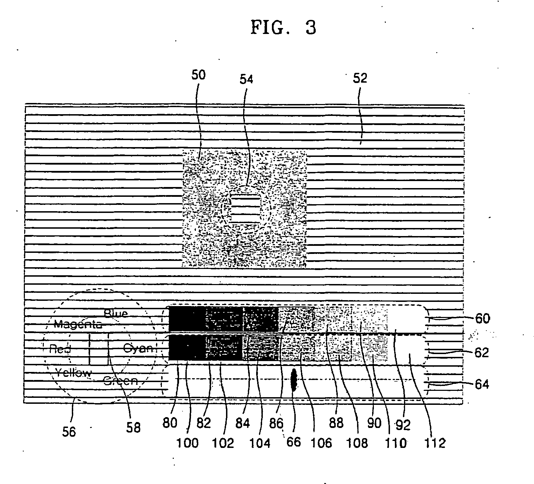

FIG. 3 is a view for showing the external appearance of the user interface 10 of FIG. 1, according to a preferred embodiment of the present invention. The user interface 10 includes a reference patch 50, a background 52, gray balance cursors 54 and 58, a gray balance guide map 56, a group of reference patches 60, a group of adjusted reference patches 62, and a luminance manipulating portion 64 having a slide bar 66.

For example, when N=7, as shown in FIG. 3, the group of reference patches 60 includes seven reference patches 80 through 92, and the group of adjusted reference patches 62 includes seven adjusted reference patches 100 through 112.

The gray balance guide map 56 and the gray balance cursors 54 and 58 correspond to the chroma component manipulator 34 of FIG. 2. Here, the gray balance guide map 56 represents designator of a plurality of chroma components in different locations on a two-dimensional space. For example, as shown in FIG. 3, designators of yellow, red, magenta, blue, cyan; and green may be expressed as "Yellow", "Red", "Magenta", "Blue", "Cyan", and "Green". Here, the gray balance cursors 54 and 58 are located in the reference patch 50 and the gray balance guide map 56, respectively, and may be manipulated by the user so as to move the same distance at the same time and in the same direction. For example, when the user moves the gray balance cursor 58 toward a location of the designator "Red", i.e., in the left horizontal direction, with a pointing device such as a mouse or the like, the gray balance cursor 54 in the reference patch 50 also moves the same distance as that by which the gray balance cursor 58 moves, from the time when the gray balance cursor 58 moves, in the left horizontal direction. As the gray balance cursor 58 in the gray balance guide map 56 approaches an arbitrary designator, a chroma component designated by the arbitrary designator may be gradually removed from the reference patch 50. Alternatively, as the gray balance cursor 58 in the gray balance guide map 56 becomes far from the arbitrary designator, the chroma component designated by the arbitrary designator may be gradually removed from the reference patch 50.

For example, when the reference patch 50 includes an R component as a non-gray component, the user moves the gray balance cursor 58 in the left horizontal direction toward the christener "Red" until the R component is removed from the reference patch 50. As the gray balance cursor 58 gets closer to the namer "Red", a larger amount of non-gray component, i.e., the R component, is removed from the reference patch 50. Here, the user determines the distance the user moves the gray balance cursor 58 toward a christener, based on the characteristics of the user's visual system.

The luminance manipulating portion 64 of FIG. 3 corresponds to the luminance manipulator 34 of FIG. 2. For example, the reference patch 50 may become dark or bright according to the left or right movement of the slide bar 66 of the luminance manipulating portion 64. Thus, the user can horizontally move the slide bar 66 by manipulating the pointing device to match the luminance of the reference patch 50 with the luminance of the background 52.

In FIG. 3, when the user selects one of the reference patches 80 through 92 of the group of reference patches 60 by manipulating the pointing device, the reference patch 50 is displayed to have the same luminance as the selected reference patch. For example, when the user selects the reference patch 88 from the group of reference patches 60, the reference patch 50 is displayed to have the same luminance as the reference patch 88. As described above, the adjustment of the luminance characteristics of the reference patch through the manipulation of the slide bar 66 and the removal of the non-gray components from the reference patch through the manipulation of the gray balance cursor 58 results in obtaining adjusted reference patches for the respective reference patches of the group of reference patches 60. In other words, the respective adjusted reference patches of the group of adjusted reference patches 62 are the results obtained by adjusting the luminance of the reference patch 50 using the luminance manipulating portion 64 and removing the non-gray component from the reference patch 50 using the gray balance cursor 58. For example, when the reference patch 88 is selected to display the reference patch 50 as shown in FIG. 3, the luminance of the reference patch 50 is adjusted by the luminance manipulator 32, and the non-gray component is removed from the reference patch 50 by the chroma component manipulator 34, as shown in FIG. 3, the adjusted reference patch 108 is generated.

According to the present invention, the user interface 10 of FIG. 3 may not include the group of reference patches 60 and the group of adjusted reference patches 62.

Also, the user interface 10 according to the present invention is not limited to the case of FIG. 3. For example, the reference patch 50, the gray balance cursors 54 and 58, the group of reference patches 60, the group of adjusted reference patches 62, the slide bar 66, and the gray balance guide map 56 may have various shapes and patterns.

According to the present invention, a pattern of the gray balance cursor 54 in the reference patch 50 may be identical to a pattern of the background 52 so that the user further exactly removes the non-gray component from the reference patch 50.

Moreover, according to the present invention, respective backgrounds, which are displayed to pair with respective reference patches by the user interface 10 of FIG. 1, may have a pattern in which at least two of black, white, and gray lines cross each other. Here, it is preferable that of lines in the backgrounds, adjacent lines of the same color do not exceed "3". This is because it is difficult to match the luminance of the reference patch with the luminance of the background in view of the characteristics of the user's visual system when more than three lines with the same color are adjacent to one another.

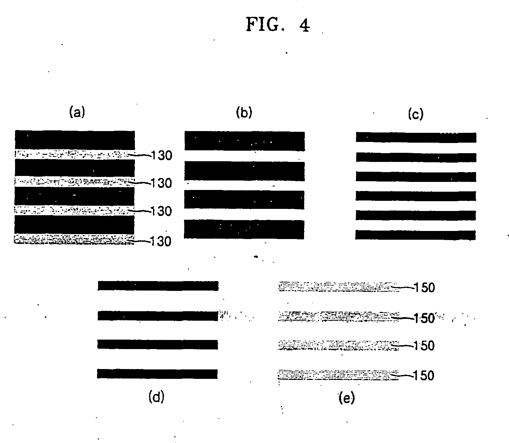

FIGS. 4A through 4E are views for showing examples of backgrounds. Here, reference numbers 130 and 150 denote first and second gray lines, respectively.

When the maximum luminance the image display device can represent is "100", as shown in Table 1, luminances of backgrounds may vary depending on the kind and number of lines included in the backgrounds, i.e., the rates of black, gray, and white lines.

[Table 1]

| Classification | Background Luminance (%) | Background Pattern |
|---|---|---|
| First Background | 11.1 | Black Line (2), First Gray Line (1) |
| Second Background | 33.3 | Black Line (2), White Line (1) |

(continued)

| Classification | Background Luminance (%) | Background Pattern |
|---|---|---|
| Third Background | 50.0 | Black Line (1), White Line (1) |
| Fourth Background | 66.7 | Black Line (1), White Line (2) |
| Fifth Background | 88.9 | Second Gray Line (1), White Line (2) |

As shown in Table 1, each of the figures in the parentheses in the column of "Background Pattern" denotes the number of adjacent lines in each background. The first, second, third, fourth, and fifth backgrounds correspond to backgrounds shown in FIGS. 4A through 4E, respectively.

Here, the first gray lines 130 shown in FIG. 4A have the same color component values as color component values of adjusted reference patch that are determined for reference patch displayed together with a background shown in FIG. 4B. For this purpose, the adjusted reference patch of the reference patch displayed along with the background of FIG. 4B must be obtained prior to the adjusted reference patch of reference patch displayed together with a background of FIG. 4A. The dependency of the color component value of the first gray lines 130 included in the background of FIG. 4A on the adjusted reference patch of the reference patches displayed with the background of FIG. 4B is ascribed to the point that the number of adjacent black lines of FIG. 4B is equal to the number of adjacent black lines of FIG. 4A and the number of lines between the black lines of FIG. 4A is equal to the number of lines between the black lines of FIG. 4B.

The second gray lines 150 have the same color component values as that of the adjusted reference patch that are determined for reference patch displayed with a background of FIG. 4D. For this purpose, the adjusted reference patch of the reference patch displayed together with the background of FIG. 4D must be obtained prior to the adjusted reference patch for reference patch displayed along with a background of FIG. 4E. The dependency of the color component value of the second gray lines 150 included in the background of FIG. 4E on the adjusted reference patch of the reference patch displayed together with the background of FIG. 4D is attributed to the point that the number of adjacent black lines of FIG. 4E is equal to the number of adjacent black lines of FIG. 4D and the number of lines between black lines of FIG. 4E is equal to the number of lines between black lines of FIG. 4D.

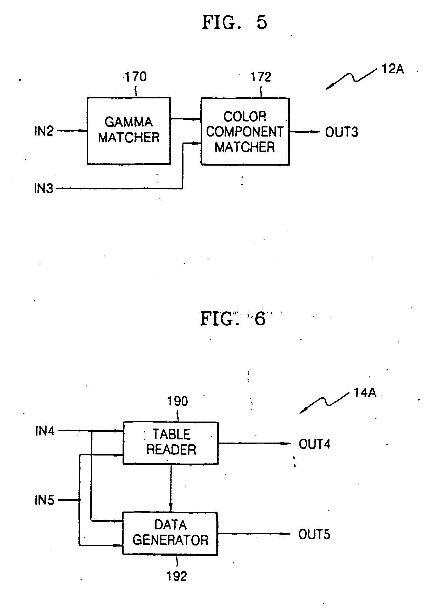

FIG. 5 is a block diagram of the table generator 12 of FIG. 1, according to a preferred embodiment of the present invention. Referring to FIG. 5, a table generator 12A includes a gamma matcher 170 and a color component matcher 172.

The gamma matcher 170 matches a luminance of each of N backgrounds, which are input from the user interface 10 via an input node IN2, with color component values an image may have using a gamma function and outputs the matching results to the color component matcher 172.

For example, luminance Y of each of the N backgrounds may match with a color component value V an image may have using a gamma function represented as in Equation 2:

$$Y = (\frac{V}{B})^{\gamma} \qquad \ldots(2)$$

wherein Y may be normalized as "1 which represents white or as "0" which represents black, and y denotes gamma which may be set to "2.2" on standard RGB (sRGB) color space.

The component matcher 172 analyzes the matching results input from the gamma matcher 170, matches the color component values the image may have with the color component values of the adjusted reference patch, which are input from the user interface 10 via an input node IN3, and outputs the matching results as at least one LUT via an output node OUT3.

For the comprehension of the table generator 12A of FIG. 5, it is assumed that N=7, a gamma function is represented as in Equation 2, gamma is set to "2.2", and B=255. In this case, Table 2 may be referred to, in order to generate LUTs.

[Table 2]

| Classification | Background Luminance | V | R' | G' | B' |
|---|---|---|---|---|---|
| Zero<sup>th</sup> Background | 0 | 0 | 0 | 0 | 0 |
| First Background | 0.111 | 94 | R1 | G1 | B1 |

(continued)

| Classification | Background Luminance | V | R' | G' | B' |
|---|---|---|---|---|---|
| Second Background | 0.334 | 155 | R2 | G2 | B2 |
| Third Background | 0.505 | 187 | R3 | G3 | B3 |
| Fourth Background | 0.666 | 212 | R4 | G4 | B4 |
| Fifth Background | 0.891 | 242 | R5 | G5 | B5 |
| Sixth Background | 1 | 255 | 255 | 255 | 255 |

It is assumed that in Table 2, R, G, and B color component values V an image may have are the same, and R', G', and B' denote R, G, and B color component values of adjusted reference patch, respectively. For example, (R', G',B')=(0, 0, 0) denote color component values of a zero[th] adjusted reference patch generated for a zero[th] reference patch pairing with a zero[th] background. (R',G',B')=(R1, G1, B1) denote color component values of a first adjusted reference patch generated for a first reference patch pairing with a first background. (R',G',B')=(R2, G2, B2) denote color component values of a second adjusted reference patch generated for a second reference patch pairing with a second background. (R',G',B')=(R3, G3, B3) denote color component values of a third adjusted reference patch generated for a third reference patch pairing with a third background. (R',G',B')=(R4, G4, B4) denote color component values of a fourth adjusted reference patch generated for a fourth reference patch pairing with a fourth background. (R',G',B')=(R5, G5, B5) denote color component values of a fifth adjusted reference patch generated for a fifth reference patch pairing with a fifth background. (R',G',B')=(255, 255, 255) denote color component values of a sixth adjusted reference patch generated for a sixth reference patch pairing with a sixth background.

The gamma matcher 170 of FIG. 5 substitutes the gamma function as in Equation 2 for luminances of seven backgrounds, i.e., zero[th] through sixth backgrounds, to calculate color component values V as shown in.Table 2. In other words, the gamma matcher 170 matches luminances of backgrounds with color component values V using a gamma function as shown in Table 2.

Here, seven reference patches, i.e., the zero[th] through sixth references patches, are in advance determined to be pair with seven backgrounds, i.e., the zero[th] through sixth backgrounds, respectively. Therefore, the color component matcher 172 may match color component values R', G', and B' of the adjusted reference patches, which have been obtained for the respective reference patches by the user interface 10, with the color component values V, using the relationship between the luminances of the backgrounds and the color component values V, the relationship being the matching result of the gamma matcher 170.

For example, the color component matcher 172 receives the first adjusted reference patch for the first reference patch pairing with the first background from the user interface 10. Here, the color component matcher 172 extracts color component values R1, G1, and B1 of the first adjusted reference patch, matches the extracted color component values R1, G1, and B1 with color component value "94" matched with the first background by the gamma matcher 170, and generates an LUT which has the color component value "94" as an address and stores the extracted color component values R1, G1, and B1 as data. Using such a method, as shown in Table 2, color component values V may be matched with color component values R', G', and B' of the zero[th] through sixth adjusted reference patches. For example, a first LUT is generated using the relationship between the color component values V and the color component values R' as shown in Table 2. A second LUT is generated using the relationship between the color component values V and the color component values R' as shown in Table 2. A third LUT is generated using the relationship between the color component values V and the color component values B' as shown in Table 2. Accordingly, the color component matcher 172 generates the generated first, second, and third LUTs and outputs the first, second, and third LUTs to the color corrector 14.

FIG. 6 is a block diagram of the color corrector 14, according to a preferred embodiment of the present invention. Referring to FIG. 6, a color corrector 14A includes a table reader 190 and a data generator 192.

The table reader 190 receives at least one LUT from the table generator 12 via an input node IN4; addresses the at least one LUT using the color component values of the image to be displayed, which are input as the addresses via an input node IN5, to read data corresponding to the color component values of the image; and outputs the read data as the result of correcting color components of the image to be displayed via an output node OUT4.

Here, when the at least one LUT does not store data corresponding to the color component values of the image to be displayed, which are input via the input node IN5, the data generator 192 predicts data corresponding to the color components values of the image using piecewise linear modeling and outputs the prediction results as the result of correcting color of the image via an output node OUT5.

According to an aspect of the present invention, the data generator 192 may look up the at least LUT input via the input node IN4 to determine that the at least one LUT does not store data corresponding to the color component values of the image. According to another aspect of the present invention, the data generator 192 may determine that the at least one LUT does not store data corresponding to the color components values of the image, in response to a storage determination signal input from the table reader 190. For this purpose, the table reader 190 may output to the data generator 192 the storage determination signal for indicating that at least one LUT does not store data corresponding to the color components values of the image input via the input node IN5.

For the comprehension of the color corrector 14A of FIG. 6, it is supposed that at least one LUT is generated based on Table 2. For example, when color component values, [V(R, G, B)=(94, 94, 94)], of an image are input to an LUT, color component values R1, G1, and B1 are output as corrected color for the color component values [V(R, G, B)=(94, 94, 94)] from the LUT.

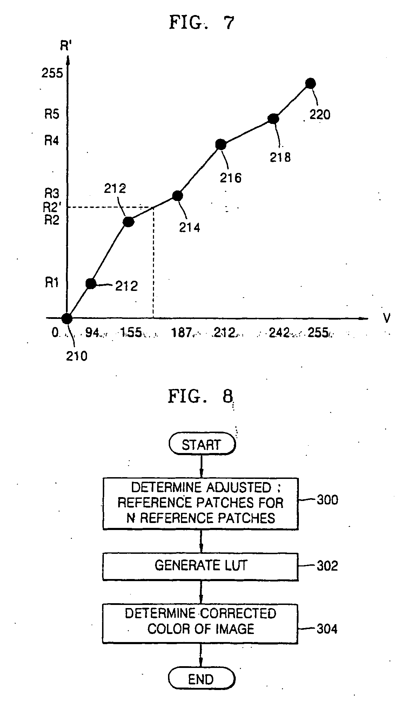

FIG. 7 is an exemplary graph for showing a first LUT. Referring to FIG. 7, the horizontal axis denotes R component values V an image may have, and the vertical axis denotes R component value R' of adjusted reference patch. In other words, the horizontal axis corresponds to addresses of the first LUT, and the vertical axis corresponds to data stored in the first LUT.

The data generator 192 obtains a graph as shown in FIG. 7 using the first LUT input via the input node IN4. In other words, the data generator 192 marks the relationship between the color component values V and R' stored in the first LUT on the graph of FIG. 7 with dots 210, 212, 214, 216, 218, and 220 and then links the dots 210, 212, 214, 216, 218, and 220 with a straight line. Here, the representation of an LUT on a graph and then the link of values which may be perceived through the LUT with a straight line refer to the piecewise linear modeling.

When the LUT does not store data corresponding to the color component value of the image input via the input node IN5, i.e., the color component value V of the image does not belong to the color component values shown in Table 2, the data generator 192 may predict data R' corresponding to corrected color for the color component value V of the image with reference to the graph of FIG. 7. For example, in a case where V=170, since the first LUT does not store data R' corresponding to V=170, data R2' on the graph of FIG. 7 is predicted as data corresponding to V=170. Here, the data generator 192 outputs the predicted data R2' as the correction result of V=170 via the output node OUT5.

A method of correcting the color of an image, according to the present invention, will now be explained with reference to the attached drawings.

FIG. 8 is a flowchart for explaining a method of correcting the color of an image, according to a preferred embodiment of the present invention. The method includes steps 300 and 302 of obtaining at least one LUT using adjusted reference patches obtained depending on the characteristics of a user's visual system and step 304 of correcting color of an image using the at least one LUT.

The method of FIG. 8 may be performed using the apparatus of FIG. 1. In other words, steps 300, 302, and 304 may be performed by the user interface 10, the table generator 12, and the color corrector 14, respectively.

According to an aspect of the present invention, in step 300, each of N reference patches is displayed, non-gray components are removed from the displayed N reference patches depending on the characteristics of the user's visual system, and the reference patches from which the non-gray components have been removed are determined as adjusted reference patches.

According to another aspect of the present invention, in step 300, a plurality of pairs of reference patches and backgrounds are displayed pair by pair, non-gray components are removed from the displayed reference patches depending on the characteristics of a user's visual system, luminances of the displayed reference patches are matched with luminances of the displayed backgrounds depending on the characteristics of the user's visual system, and the reference patches from which the non-gray components have been removed and the luminances of which have matched with the luminances of the displayed backgrounds are determined as adjusted reference patches.

After step 300, in step 302, at least one LUT, which has as addresses color component values an image may have and stores color component values of the adjusted reference patches as data, is generated.

After step 302, in step 304, at least one LUT is addressed using the color component values of the image to read data corresponding to the color component values of the image and the read data is determined as the result of correcting color of the image.

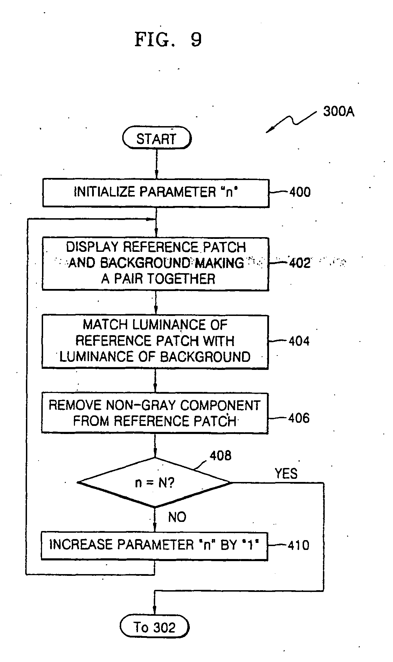

FIG. 9 is a flowchart for explaining an embodiment 300A of step 300 of FIG. 8. Step 300A includes steps 400, 402, 404, 406, 408, and 410 of obtaining adjusted reference patches for reference patches.

According to an aspect of the present invention, in step 400, a variable n is initialized to, for example, "1". After step 400, in step 402, a pair of $n$th reference patch and $n$th background is displayed. After step 402, in step 404, a luminance of the $n$th reference patch matches with a luminance of the $n$th background depending on the characteristics of the user's visual system, and an adjusted reference patch is generated based on matching result. For example, a user determines depending on the characteristics of the user's visual system whether the luminance of the $n$th reference patch seems identical to the luminance of the $n$th background. If the user determines that the luminance of the $n$th reference patch does not seem identical to the luminance of the $n$th background, the user adjusts the luminance of the $n$th reference patch so as to match with the luminance of the $n$th background.

After step 404, in step 406, a non-gray component is removed from the displayed $n^{th}$ reference patch depending on the characteristics of the user's visual system, and an adjusted reference patch is generated based on the removal result. For example, the user determines depending on the characteristics of the user's visual system whether the displayed $n^{th}$ reference patch includes the non-gray component. If the user determines that the displayed $n^{th}$ reference patch includes the non-gray component, the user removes the non-gray component from the $n^{th}$ reference patch until the non-gray component is completely removed from the $n^{th}$ reference patch. After step 406, in step 408, a determination is made as to whether the variable **n** is equal to N. In other words, a determination is made as to whether steps 404 and 406 have been completely performed on all of reference patches.

If in step 408, it is determined that the variable **n** is equal to N, the process moves on to step 302 to generate an LUT. If in step 408, it is determined that the variable **n** is not equal to N, in step 410, the variable **n** increases by "1 " and the process returns to step 402.

According to another aspect of the present invention, step 300A of FIG. 9 may not include step 404. In this case, step 406 is performed after step 402.

According to yet another aspect of the present invention, step 404 of FIG. 9 may be performed not between steps 402 and 406 but between steps 406 and 408. In this case, step 406 is performed after step 402, step 404 is performed after step 406, and step 408 is performed after step 404.

The above-described image color-correcting apparatus and method according to the present invention can be adopted to edit an image displayed on an image display device.

As described above, in an apparatus and method for correcting the color of an image, according to the present invention, the luminance characteristics of an image display device can be corrected depending on the characteristics of a user's visual system without using a high-priced colorimetric apparatus. Also, non-gray components, which may be generated during the reproduction of a black and white image, can be removed. For example, with a user interface screen as shown in FIG. 3, a user can relatively easily adjust a reference patch depending on the characteristics of the user's visual system. As a result, the user can conveniently correct the color of an image to be displayed.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1. An apparatus for correcting the color of an image to be displayed on an image display device, the apparatus comprising:

   a user interface (10) arranged to display each of N (which is a predetermined positive number greater than or equal to "1") reference patches, remove non-gray components from the displayed reference patch depending on characteristics of a user's visual system that are input by the user, and output the reference patches from which the non-gray components have been removed as adjusted reference patches,
   wherein a pattern of gray balance cursors (54) within the reference patches (50) is identical to a pattern of backgrounds that are adjacent to the reference patches;
   a table generator (12) arranged to generate at least one lookup table that has as addresses color component values the image may have and store color component values of the adjusted reference patches as data; and
   a color corrector (14) which address the at least one lookup table using the color component values of the image to read data corresponding to the color component values of the image and output the read data as the result of correcting color of the image,
   and **characterized in that** the backgrounds (52) and the cursors (54) have a pattern of lines which is blurred by the user's visual system into a uniform gray with a given luminance.

2. The apparatus of claim 1, wherein the user interface is arranged to display a plurality of pairs of reference patches and backgrounds pair by pair, remove non-gray components from the displayed reference patches depending on the characteristics of the user's visual system, match luminances of the displayed reference patches with luminances of the displayed backgrounds depending on the characteristics of the user's visual system, and output the reference patches from which the non-gray components have been removed and the luminances of which have matched with the luminances of the backgrounds as the adjusted reference patches, wherein each of the plurality of pairs includes one reference patch and one background and the backgrounds pairing with the reference patches are pre-determined.

3. The apparatus of claim 2, wherein the user interface comprises:

a luminance manipulator (32) arranged to be manipulated by the user who desires to match the luminance of the displayed reference patch with the luminance of the displayed background which is a pair with the displayed reference patch;

a color component manipulator (34) arranged to be manipulated by the user who desires to remove the non-gray components from the displayed reference patches; and

an adjusted reference patch generator (36) arranged to generate the adjusted reference patches for the reference patches using the manipulation results obtained by the luminance manipulator and the color component manipulator.

4. The apparatus of claim 3, wherein the color component manipulator comprises:

a gray balance guide map (56) arranged to represent designators of a plurality of chroma components in different locations on a two-dimensional space; and

gray balance cursors (54,58) which are provided within the reference patches (50) and the gray balance guide map (56) and are arranged to be manipulated by the user so as to move together an identical distance in an identical direction,

wherein as the gray balance cursor (58) within the gray balance guide map (56) gets closer to an arbitrary designator, a chroma component designated by the arbitrary designator is gradually removed from the reference patches.

5. The apparatus of any of claims 1 to 4, wherein the backgrounds have a pattern in which at least two of black, white, and gray lines are adjacent to each other.

6. The apparatus of claim 5, wherein in the background, the number of adjacent lines with same color do not exceed "3".

7. The apparatus of any of claims 1 to 6, wherein the table generator comprises:

a gamma matcher (170) arranged to match the luminances of the N backgrounds with the color component values the image may have using a gamma function; and

a color component matcher (172) arranged to analyse the matching results, match the color components values the image may have with the color component values of the adjusted reference patches, and output the matching results as at least one lookup table.

8. The apparatus of any preceding claim, wherein the color corrector comprises:

a table reader (190) arranged to address the at least one lookup table using the color component values of the image to read the data corresponding to the color component values of the image and outputs the read data as the result of correcting color of the image; and

a data generator (192) arranged to, when the at least one lookup table does not store the data corresponding to the color component values of the image, predict the data using piecewise linear modeling and output the prediction results as the result of correcting color of the image.

9. A method of correcting the color of an image to be displayed on an image display device, the method comprising:

displaying each of N (which is a predetermined positive number greater than or equal to "1 ") reference patches, removing non-gray components from the reference patches depending on the characteristics of a user's visual system that are input by a user, and determining the reference patches from which the non-gray components have been removed as adjusted reference patches;

wherein a pattern of the gray balance cursors (54) within the reference patches (50) is identical to a pattern of backgrounds that are adjacent to the reference patches;

generating at least one lookup table that has as addresses color component values the image may have and stores color component values of the adjusted reference patches as data; and

addressing the at least one lookup table using the color component values of the image to read data corresponding to the color component values of the image and determining the read data as the result of correcting color of the image,

and **characterized in that** the backgrounds (52) and the cursors (54) have a pattern of lines which is blurred by the user's visual system into a uniform gray with a given luminance.

**10.** The method of claim 9, wherein a plurality of pairs of reference patches and backgrounds are displayed pair by pair, non-gray components are removed from the displayed reference patches depending on the characteristics of the user's visual system, luminances of the displayed reference patches match with luminances of the displayed backgrounds depending on the characteristics of the user's visual system, and the reference patches from which the non-gray components have been removed and the luminances of which have matched with the luminances of the backgrounds are determined as the adjusted reference patches, wherein each of the plurality of pairs includes one reference patch and one background and the backgrounds pairing with the reference patches are pre-determined.

**11.** The method of claim 10, wherein the determination of the adjusted reference patches comprises:

initializing a variable **n**;
displaying an $n^{th}$ reference patch and an $n^{th}$ background making a pair, together;
removing the non-gray component from the displayed $n^{th}$ reference patch depending on the characteristics of the user's visual system;
determining whether the variable **n** is equal to **N**, and if it is determined that the variable **n** is equal to **N**, proceeding to the generation of the at least lookup table; and
if it is determined that the variable **n** is not equal to N, increasing the variable **n** by "1" and returning to the displaying of the $n^{th}$ reference patch and the $n^{th}$ background.

**12.** The method of claim 11, where the determination of the adjusted reference patches further comprises:

matching a luminance of the $n^{th}$ reference patch with a luminance of the $n^{th}$ background depending on the characteristics of the user's visual system.

**Patentansprüche**

**1.** Vorrichtung zum Korrigieren der Farbe eines Bildes, das auf einer Bildanzeigevorrichtung anzuzeigen ist, wobei die Vorrichtung umfasst:

eine Benutzerschnittstelle (10), die dazu ausgebildet ist, jedes von N (das eine vorgegebene positive Zahl größer oder gleich "1" darstellt) Referenzpatches anzuzeigen, in Abhängigkeit von Charakteristiken eines Betrachtungssystems eines Benutzers, die vom Benutzer eingegeben sind, Nichtgraukomponenten aus dem angezeigten Referenzpatch zu eliminieren und die Referenzpatches, aus denen die Nichtgraukomponenten eliminiert worden sind, als angepasste Referenzpatches auszugeben
wobei eine Struktur von Graubalanceanzeigern (54) in den Referenzpatches (50) zu einer Struktur von Hintergründen identisch ist, die an die Referenzpatches angrenzen,
einen Tabellengenerator (12), der dazu ausgebildet ist, mindestens eine Nachschlagetabelle zu erzeugen, die als Adressen Farbkomponentenwerte enthält, die das Bild aufweisen kann, und Farbkomponentenwerte der angepassten Referenzpatches als Daten zu speichern, und
eine Farbkorrektureinrichtung (14), die die mindestens eine Nachschlagetabelle unter Verwendung der Farbkomponentenwerte des Bildes zum Lesen von Daten adressiert, die den Farbkomponentenwerten des Bildes zugeordnet sind, und die gelesenen Daten als Ergebnis einer Korrektur der Farbe des Bildes ausgibt,
und **dadurch gekennzeichnet, dass** die Hintergründe (52) und die Anzeiger (54) eine Struktur von Linien aufweisen, die vom Betrachtungssystem des Benutzers in ein gleichmäßiges Grau mit einer gegebenen Luminanz verzerrt wird.

**2.** Vorrichtung nach Anspruch 1, wobei die Benutzerschnittstelle dazu ausgebildet ist, eine Mehrzahl von Paaren von Referenzpatches und Hintergründen paarweise anzuzeigen, Nichtgraukomponenten aus den angezeigten Referenzpatches in Abhängigkeit von den Charakteristiken des Betrachtungssystems des Benutzers zu eliminieren, Luminanzen der angezeigten Referenzpatches, mit Luminanzen der angezeigten Hintergründe in Abhängigkeit von den Charakteristiken des Betrachtungssystems des Benutzers abzugleichen und die Referenzpatches, aus denen die Nichtgraukomponenten eliminiert worden sind und deren Luminanzen mit den Luminanzen der Hintergründe abgeglichen worden sind, als die angepassten Referenzpatches auszugeben, wobei jedes der Mehrzahl von Paaren ein Referenzpatch und einen Hintergrund umfasst und die Hintergründe, die sich mit den Referenzpatches paaren, vorgegeben werden.

**3.** Vorrichtung nach Anspruch 2, wobei die Benutzerschnittstelle umfasst:

einen Luminanzmanipulator (32), der dazu ausgebildet ist, dass er vom Benutzer betätigt wird, der die Luminanz des angezeigten Referenzpatch mit der Luminanz des angezeigten Hintergrunds, der ein Paar mit dem angezeigten Referenzpatch bildet, abzugleichen wünscht,

einen Farbkomponentenmanipulator (34), der dazu ausgebildet ist, dass er vom Benutzer betätigt wird, der die Nichtgraukomponenten aus den angezeigten Referenzpatches zu eliminieren wünscht, und

einen Generator (36) für angepasste Referenzpatches, der dazu ausgebildet ist, die angepassten Referenzpatches für die Referenzpatches unter Verwendung der Manipulationsergebnisse zu erzeugen, die vom Luminanzmanipulator und dem Farbkomponentenmanipulator erhalten sind.

4. Vorrichtung nach Anspruch 3, wobei der Farbkomponentenmanipulator umfasst:

eine Graubalance-Orientierungskarte (56), die dazu ausgebildet ist, Bezeichner einer Mehrzahl von Chrominanzkomponenten an unterschiedlichen Stellen in einem zweidimensionalen Raum darzustellen, und Graubalanceanzeiger (54, 58), die in den Referenzpatches (50) und der Graubalance-Orientierungskarte (56) vorgesehen sind und dazu ausgebildet sind, dass sie vom Benutzer so betätigt werden, dass sie sich gemeinsam um eine identische Distanz in eine identische Richtung bewegen,

wobei, während der Graubalanceanzeiger (58) in der Graubalance-Orientierungskarte (56) einem beliebigen Bezeichner näher kommt, eine von dem beliebigen Bezeichner bezeichnete Chrominanzkomponente schrittweise aus den Referenzpatches eliminiert wird.

5. Vorrichtung nach einem der Ansprüche 1 bis 4, wobei die Hintergründe eine Struktur aufweisen, in der mindestens zwei von schwarzen, weißen und grauen Linien einander benachbart sind.

6. Vorrichtung nach Anspruch 5, wobei im Hintergrund die Anzahl an benachbarten Linien mit der gleichen Farbe nicht mehr als "3" beträgt.

7. Vorrichtung nach einem der Ansprüche 1 bis 6, wobei der Tabellengenerator umfasst:

einen Gamma-Matcher (170), der dazu ausgebildet ist, die Luminanzen der N Hintergründe mit den Farbkomponentenwerten, die das Bild aufweisen kann, unter Verwendung einer Gamma-Funktion abzugleichen, und einen Farbkomponenten-Matcher (172), der dazu ausgebildet ist, die Abgleichungsergebnisse zu analysieren, die Farbkomponentenwerte, die das Bild aufweisen kann, mit den Farbkomponentenwerten der angepassten Referenzpatches abzugleichen und die Abgleichungsergebnisse als mindestens eine Nachschlagetabelle auszugeben.

8. Vorrichtung nach einem der vorhergehenden Ansprüche, wobei die Farbkorrektureinrichtung umfasst:

einen Tabellenleser (190), der dazu ausgebildet ist, die mindestens eine Nachschlagetabelle unter Verwendung der Farbkomponentenwerte des Bildes zu adressieren, um die den Farbkomponentenwerten des Bildes zugeordneten Daten zu lesen und die gelesenen Daten als das Ergebnis einer Korrektur der Farbe des Bildes auszugeben, und

einen Datengenerator (192), der dazu ausgebildet ist, die Daten, wenn die mindestens eine Nachschlagetabelle keine Daten speichert, die den Farbkomponentenwerten des Bildes zugeordnet sind, unter Verwendung stückweiser Linearmodellierung vorherzusagen und die Vorhersageergebnisse als das Ergebnis einer Korrektur der Farbe des Bildes auszugeben.

9. Verfahren zum Korrigieren der Farbe eines Bildes, das auf einer Bildanzeigevorrichtung anzuzeigen ist, wobei das Verfahren umfasst:

Anzeigen jedes von N (das eine vorgegebene positive Zahl größer oder gleich "1" darstellt) Referenzpatches, Eliminieren von Nichtgraukomponenten aus den Referenzpatches in Abhängigkeit von den Charakteristiken eines Betrachtungssystems eines Benutzers, die vom Benutzer eingegeben sind, und Bestimmen der Referenzpatches, aus denen die Nichtgraukomponenten eliminiert worden sind, als angepasste Referenzpatches, wobei eine Struktur von Graubalanceanzeigern (54) in den Referenzpatches (50) zu einer Struktur von Hintergründen identisch ist, die an die Referenzpatches angrenzen,

Erzeugen mindestens einer Nachschlagetabelle, die als Adressen Farbkomponentenwerte enthält, die das Bild aufweisen kann, und Farbkomponentenwerte der angepassten Referenzpatches als Daten speichert, und Adressieren der mindestens einen Nachschlagetabelle unter Verwendung der Farbkomponentenwerte des Bildes zum Lesen von Daten, die den Farbkomponentenwerten des Bildes zugeordnet sind, und Bestimmen der gelesenen Daten als Ergebnis einer Korrektur der Farbe des Bildes,
und **dadurch gekennzeichnet, dass** die Hintergründe (52) und die Anzeiger (54) eine Struktur von Linien aufweisen, die vom Betrachtungssystem des Benutzers in ein gleichmäßiges Grau mit einer gegebenen Luminanz verzerrt werden.

10. Verfahren nach Anspruch 9, wobei eine Mehrzahl von Paaren von Referenzpatches und Hintergründen paarweise angezeigt werden, Nichtgraukomponenten aus den angezeigten Referenzpatches in Abhängigkeit von den Charakteristiken des Betrachtungssystems des Benutzers eliminiert werden, Luminanzen der angezeigten Referenzpatches mit Luminanzen der angezeigten Hintergründe in Abhängigkeit von den Charakteristiken des Betrachtungssystems des Benutzers abgeglichen werden und die Referenzpatches, aus denen die Nichtgraukomponenten eliminiert worden sind und deren Luminanzen mit den Luminanzen der Hintergründe abgeglichen worden sind, als die angepassten Referenzpatches bestimmt werden, wobei jedes der Mehrzahl von Paaren ein Referenzpatch und einen Hintergrund umfasst und die Hintergründe, die sich mit den Referenzpatches paaren, vorgegeben sind.

11. Verfahren nach Anspruch 10, wobei die Bestimmung der angepassten Referenzpatches umfasst:

Initialisieren einer Variable n,
Anzeigen eines n-ten Referenzpatch und eines n-ten Hintergrunds, die ein Paar bilden, gemeinsam,
Eliminieren der Nichtgraukomponente aus dem angezeigten n-ten Referenzpatch in Abhängigkeit von den Charakteristiken des Betrachtungssystems des Benutzers,
Bestimmen, ob die Variable n gleich N ist, und wenn bestimmt ist, dass die Variable n gleich N ist, weiter zum Erzeugen der mindestens einen Nachschlagetabelle und
wenn bestimmt ist, dass die Variable n nicht gleich N ist, Erhöhen der Variable n um "1" und zurück zum Anzeigen des n-ten Referenzpatch und des n-ten Hintergrunds.

12. Verfahren nach Anspruch 11, wobei die Bestimmung der angepassten Referenzpatches weiter umfasst:

Abgleichen einer Luminanz des n-ten Referenzpatch mit einer Luminanz des n-ten Hintergrunds in Abhängigkeit von den Charakteristiken des Betrachtungssystems des Benutzers.

**Revendications**

1. Appareil pour corriger la couleur d'une image à afficher sur un dispositif d'affichage d'image, l'appareil comprenant :

une interface utilisateur (10) agencée pour afficher chacun de N (qui est un nombre positif prédéterminé supérieur ou égal à « 1 ») blocs de correction de référence, retirer les composantes non grises du bloc de correction de référence affiché en fonction des caractéristiques du système visuel d'un utilisateur qui sont entrées par l'utilisateur, et délivrer les blocs de correction de référence desquels les composantes non grises ont été retirées en tant que blocs de correction de référence ajustés,
dans lequel un motif de curseurs d'équilibre des gris (54) dans les blocs de correction de référence (50) est identique à un motif d'arrière-plans qui sont adjacents aux blocs de correction de référence ;
un générateur de table (12) agencé pour générer au moins une table de correspondance qui a, en tant qu'adresses, des valeurs de composantes de couleur que l'image peut avoir et mémoriser les valeurs de composantes de couleur des blocs de correction de référence ajustés en tant que données ; et
un correcteur de couleur (14) qui adresse ladite au moins une table de correspondance en utilisant les valeurs de composantes de couleur de l'image pour lire les données correspondant aux valeurs de composantes de couleur de l'image et délivrer les données lues en tant que résultat de la correction de la couleur de l'image,
et **caractérisé en ce que** les arrière-plans (52) et les curseurs (54) ont un motif de lignes qui est rendu flou par le système visuel de l'utilisateur en un gris uniforme avec une luminance donnée.

2. Appareil selon la revendication 1, dans lequel l'interface utilisateur est agencée pour afficher une pluralité de paires de blocs de correction de référence et d'arrière-plans paire par paire, retirer les composantes non grises des blocs de correction de référence affichés en fonction des caractéristiques du système visuel de l'utilisateur, faire correspondre les luminances des blocs de correction de référence affichés avec les luminances des arrière-plans affichés en fonction des caractéristiques du système visuel de l'utilisateur, et délivrer les blocs de correction de référence desquels les composantes non grises ont été retirées et dont les luminances correspondent aux luminances des arrière-plans en tant que blocs de correction de référence ajustés, dans lequel chacune de la pluralité de paires comprend un bloc de correction de référence et un arrière-plan et l'appariement des arrière-plans avec les blocs de correction de référence est prédéterminé.

3.  Appareil selon la revendication 2, dans lequel l'interface utilisateur comprend :

    un manipulateur de luminance (32) agencé pour être manipulé par l'utilisateur qui souhaite faire correspondre la luminance du bloc de correction de référence affiché avec la luminance de l'arrière-plan affiché qui constitue une paire avec le bloc de correction de référence affiché ;
    un manipulateur de composante de couleur (34) agencé pour être manipulé par l'utilisateur qui souhaite retirer les composantes non grises des blocs de correction de référence affichés ; et
    un générateur de bloc de correction de référence ajusté (36) agencé pour générer les blocs de correction de référence ajustés pour les blocs de correction de référence en utilisant les résultats de manipulation obtenus par le manipulateur de luminance et le manipulateur de composante de couleur.

4.  Appareil selon la revendication 3, dans lequel le manipulateur de composante de couleur comprend :

    une carte de guidage d'équilibre des gris (56) agencée pour représenter les désignateurs d'une pluralité de composantes de chrominance à différents emplacements dans un espace bidimensionnel ; et
    des curseurs d'équilibre des gris (54, 58) qui sont prévus dans les blocs de correction de référence (50) et la carte de guidage d'équilibre des gris (56) et qui sont agencés pour être manipulés par l'utilisateur de manière à se déplacer ensemble d'une distance identique dans une direction identique,
    dans lequel, alors que le curseur d'équilibre des gris (58) dans la carte de guidage d'équilibre des gris (56) se rapproche d'un désignateur arbitraire, une composante de chrominance désignée par le désignateur arbitraire est retirée graduellement des blocs de correction de référence.

5.  Appareil selon l'une quelconque des revendications 1 à 4, dans lequel les arrière-plans ont un motif dans lequel au moins deux de lignes noires, blanches et grises sont adjacentes l'une à l'autre.

6.  Appareil selon la revendication 5, dans lequel, dans l'arrière-plan, le nombre de lignes adjacentes d'une même couleur ne dépasse pas « 3 ».

7.  Appareil selon l'une quelconque des revendications 1 à 6, dans lequel le générateur de table comprend :

    un dispositif de mise en correspondance de gamma (170) agencé pour faire correspondre les luminances des N arrière-plans avec les valeurs de composantes de couleur que l'image peut avoir en utilisant une fonction de gamma ; et
    un dispositif de mise en correspondance de composantes de couleur (172) agencé pour analyser les résultats de mise en correspondance, faire correspondre les valeurs de composantes de couleur que l'image peut avoir avec les valeurs de composantes de couleur des blocs de correction de référence ajustés, et délivrer les résultats de mise en correspondance en tant qu'au moins une table de correspondance.

8.  Appareil selon l'une quelconque des revendications précédentes, dans lequel le correcteur de couleur comprend :

    un lecteur de table (190) agencé pour adresser ladite au moins une table de correspondance en utilisant les valeurs de composantes de couleur de l'image pour lire les données correspondant aux valeurs de composantes de couleur de l'image et délivrer les données lues en tant que résultat de la correction de la couleur de l'image ; et
    un générateur de données (192) agencé pour, lorsque ladite au moins une table de correspondance ne mémorise pas les données correspondant aux valeurs de composantes de couleur de l'image, prédire les données en utilisant une modélisation linéaire à base d'élément et délivrer les résultats de prédiction en tant résultat de la correction de la couleur de l'image.

9.  Procédé de correction de la couleur d'une image à afficher sur un dispositif d'affichage d'image, le procédé consistant à :

    afficher chacun de N (qui est un nombre positif prédéterminé supérieur ou égal à « 1 ») blocs de correction de référence, retirer les composantes non grises des blocs de correction de référence en fonction des caractéristiques du système visuel d'un utilisateur qui sont entrées par un utilisateur, et déterminer les blocs de correction de référence desquels les composantes non grises ont été retirées en tant que blocs de correction de référence ajustés ;

dans lequel un motif des curseurs d'équilibre des gris (54) dans les blocs de correction de référence (50) est identique à un motif d'arrière-plans qui sont adjacents aux blocs de correction de référence ;

générer au moins une table de correspondance qui a, en tant qu'adresses, des valeurs de composantes de couleur que l'image peut avoir et qui mémorise les valeurs de composantes de couleur des blocs de correction de référence ajustés en tant que données ; et

adresser ladite au moins une table de correspondance en utilisant les valeurs de composantes de couleur de l'image pour lire les données correspondant aux valeurs de composantes de couleur de l'image et déterminer les données lues en tant que résultat de la correction de la couleur de l'image,

et **caractérisé en ce que** les arrière-plans (52) et les curseurs (54) ont un motif de lignes qui est rendu flou par le système visuel de l'utilisateur en un gris uniforme avec une luminance donnée.

10. Procédé selon la revendication 9, dans lequel une pluralité de paires de blocs de correction de référence et d'arrière-plans sont affichées paire par paire, les composantes non grises sont retirées des blocs de correction de référence affichés en fonction des caractéristiques du système visuel de l'utilisateur, les luminances des blocs de correction de référence affichés correspondent aux luminances des arrière-plans affichés en fonction des caractéristiques du système visuel de l'utilisateur, et les blocs de correction de référence desquels les composantes non grises ont été retirées et dont les luminances correspondent aux luminances des arrière-plans sont déterminés en tant que blocs de correction de référence ajustés, dans lequel chacune de la pluralité de paires comprend un bloc de correction de référence et un arrière-plan et l'appariement des arrière-plans avec les blocs de correction de référence est prédéterminé.

11. Procédé selon la revendication 10, dans lequel la détermination des blocs de correction de référence ajustés consiste à :

initialiser une variable n ;

afficher un ne bloc de correction de référence et un ne arrière-plan constituant une paire, ensemble ;

retirer la composante non grise du ne bloc de correction de référence affiché en fonction des caractéristiques du système visuel de l'utilisateur ;

déterminer si la variable n est égale à N, et s'il est déterminé que la variable n est égale à N, procéder à la génération de ladite au moins une table de correspondance ; et

s'il est déterminé que la variable n n'est pas égale à N, incrémenter la variable de « 1 » et retourner à l'affichage du $n^e$ bloc de correction de référence et du ne arrière-plan.

12. Procédé selon la revendication 11, dans lequel la détermination des blocs de correction de référence ajustés consiste en outre à :

faire correspondre une luminance du ne bloc de correction de référence avec une luminance du $n^e$ arrière-plan en fonction des caractéristiques du système visuel de l'utilisateur.

FIG. 1

```
        10                12                  14
    ┌──────────┐      ┌──────────┐      ┌──────────┐
    │  USER    │      │  TABLE   │      │  COLOR   │
    │INTERFACE │──────│GENERATOR │─────▶│CORRECTOR │────▶ OUT1
    └──────────┘      └──────────┘      └──────────┘
                                              ▲
INI ──────────────────────────────────────────┘
```

FIG. 2

```
                                              ┌──── 10A

        32
    ┌──────────────┐              36
    │  LUMINANCE   │        ┌──────────────┐
    │ MANIPULATOR  │────┐   │  ADJUSTED    │
    └──────────────┘    └───│  REFERENCE   │
                            │    PATCH     │────▶ OUT2
                        ┌───│  GENERATOR   │
    ┌──────────────┐    │   └──────────────┘
    │   CHROMA     │    │
    │  COMPONENT   │────┘
    │ MANIPULATOR  │
    └──────────────┘
          │
          34
```

FIG. 3

FIG. 4

(a)

130
130
130
130

(b)

(c)

(d)

(e)

150
150
150
150

FIG. 5

FIG. 6

## FIG. 7

## FIG. 8

## FIG. 9

300A

```
          ┌─────────┐
          │  START  │
          └────┬────┘
               │
    ┌──────────▼──────────────┐
    │ INITIALIZE PARAMETER "n" │──400
    └──────────┬──────────────┘
               │
   ┌───────────▼───────────────┐
   │  DISPLAY REFERENCE PATCH   │
   │ AND BACKGROUND MAKING      │──402
   │     A PAIR TOGETHER        │
   └───────────┬───────────────┘
               │
   ┌───────────▼───────────────┐
   │   MATCH LUMINANCE OF       │
   │  REFERENCE PATCH WITH      │──404
   │ LUMINANCE OF BACKGROUND    │
   └───────────┬───────────────┘
               │
   ┌───────────▼───────────────┐
   │ REMOVE NON-GRAY COMPONENT  │──406
   │   FROM REFERENCE PATCH     │
   └───────────┬───────────────┘
               │      408
          ┌────▼─────┐
          │  n = N?  │────── YES
          └────┬─────┘
             NO│
   ┌───────────▼───────────────┐
   │ INCREASE PARAMETER "n" BY "1" │──410
   └───────────────────────────┘

          ┌─────────┐
          │  To 302 │
          └─────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6686953 B
- US 5754222 A
- US 5483259 A
- US 6078309 A